# FASCICULE DE BREVET EUROPEEN

(11) **EP 2 384 427 B1**
(45) Date de publication et mention de la délivrance du brevet: **12.03.2014**
(21) Numéro de dépôt: 10706009.7
(22) Date de dépôt: 07.01.2010
(51) Int. Cl.: G01L 3/08, G01L 3/12, G01B 11/16

(54) **DISPOSITIF DE MESURE DE TORSION D'UN ARBRE TOURNANT**
VORRICHTUNG ZUM MESSEN DER DREHUNG EINES DREHSCHAFTS
DEVICE FOR MEASURING THE TORSION OF ROTATING SHAFT

(30) Priorité: 08.01.2009 FR 0950078
(43) Date de publication de la demande: 09.11.2011
(73) Titulaire: Snecma, 75015 Paris (FR)
(72) Inventeur: GALLET, François, F-75012 Paris (FR); ROUSSELIN, Stéphane, F-77850 Hericy (FR)
(74) Mandataire: Intès, Didier Gérard André
(86) Numéro de dépôt international: PCT/FR2010/050014
(87) Numéro de publication internationale: WO 2010/079300

(56) Documents cités:
- FR-A- 2 828 278
- JP-A- 55 039 019
- US-A- 3 938 890
- US-A- 4 874 245
- US-A- 5 389 780
- US-A1- 2008 156 972

## Description

L'invention se rapporte à la mesure de torsion d'un arbre tournant et concerne plus particulièrement un dispositif léger et précis permettant de mesurer directement la torsion de cet arbre en rotation et avantageusement d'en déduire le couple transmis. L'invention permet entre autre de surveiller en permanence que la valeur de cette torsion reste inférieure à une valeur critique au-delà de laquelle une rupture est possible. L'invention s'applique notamment à la mesure de torsion d'un arbre de soufflante dans un turboréacteur d'avion mais son principe peut aussi s'appliquer à d'autres systèmes de propulsion, notamment à un turboréacteur à deux hélices contrarotatives.

Sur un turboréacteur à double flux, il n'existe aucun dispositif de mesure directe de la torsion de l'arbre "basse pression" qui entraîne la soufflante. Une telle information serait pourtant utile, non seulement pour le contrôle du fonctionnement du turboréacteur mais aussi pour être en mesure de prévoir une défaillance.

Un tel turboréacteur est généralement équipé d'un dispositif mécanique de mesure du couple fourni par la turbine.

Ce dispositif est lourd et peu précis.

On connaît par ailleurs le document WO 2004/067215 qui décrit des moyens de mesure électromagnétique de la torsion d'un arbre.

En outre, un capteur de torsion d'un arbre est connu de US 4 874 245.

L'invention propose un dispositif optique de mesure de la torsion d'un tel arbre.

Plus particulièrement, l'invention concerne un dispositif de mesure de torsion d'un arbre tournant notamment un arbre d'entrainement, comportant un générateur de faisceau laser, deux filtres polarisants solidaires de l'arbre et distants l'un de l'autre et un récepteur de rayonnement laser, ledit générateur étant installé pour que le faisceau laser qu'il émet traverse les deux filtres et ledit récepteur étant installé pour recevoir ledit faisceau ayant traversé ces deux filtres, caractérisé en ce qu'un système de réflexion est installé au voisinage d'un tel filtre pour réfléchir le faisceau ayant traversé ce filtre et le renvoyer parallèlement à lui-même vers ledit récepteur et en ce que ledit système de réflexion comporte un miroir tronconique à 45°.

Selon un mode de réalisation avantageux, les deux filtres sont respectivement montés sur l'arbre lui-même au voisinage de ses deux extrémités. Lorsque l'arbre est creux, les deux filtres sont avantageusement installés à l'intérieur de cet arbre.

Selon une autre caractéristique avantageuse, le générateur et le récepteur sont agencés perpendiculairement à l'axe de rotation de l'arbre et de part et d'autre de celui-ci de façon que leurs axes optiques soient alignés. Cependant, un autre miroir tronconique à 45° porté par ledit arbre est placé entre l'émetteur et le récepteur.

Selon une autre caractéristique avantageuse, l'un des filtres comprend une couronne de zones polarisantes et de zones non polarisantes alternées, pour obtenir une succession d'informations périodiques représentatives d'une valeur de mesure et d'une valeur de référence.

On obtient ainsi une sorte d'étalonnage permanent du système de mesure.

L'invention sera mieux comprise et d'autres avantages de celle-ci apparaîtront plus clairement à la lumière de la description qui va suivre d'un dispositif de mesure de torsion d'un arbre tournant conforme à son principe, donnée uniquement à titre d'exemple et faite en référence aux dessins annexés dans lesquels :
- la figure 1 est une vue générale schématique et en demi-coupe longitudinale d'un turboréacteur à double flux équipé du dispositif de mesure de torsion conforme à l'invention ;
- la figure 2 est une vue partielle à plus grande échelle montrant la partie amont du dispositif ;
- la figure 3 est une vue schématique à plus grande échelle montrant la partie aval du dispositif ;
- la figure 4 est une vue schématique illustrant la mesure d'une valeur de référence ; et
- la figure 5 est une vue schématique illustrant la mesure d'une valeur représentative de la torsion de L'arbre.

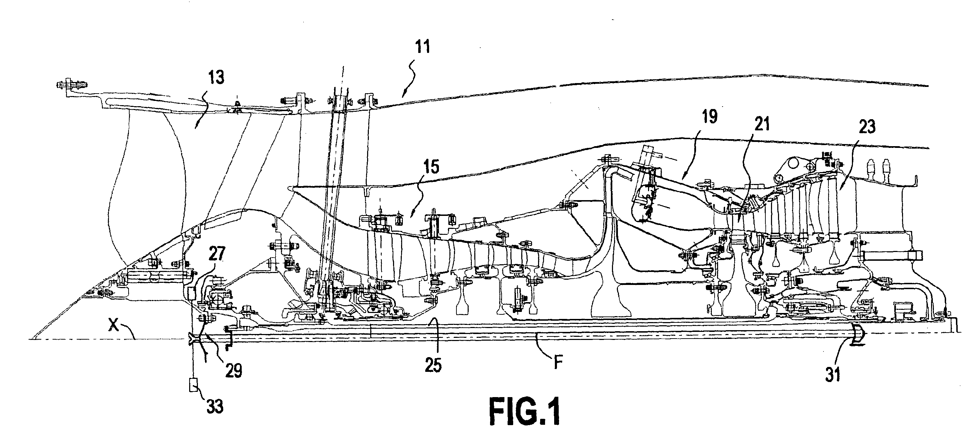

En se référant aux figures 1 à 3, on reconnaît les sous-ensembles principaux d'un turboréacteur d'avion 11 à double flux, à savoir, d'amont en aval, une soufflante 13, un compresseur basse pression 15, un compresseur haute pression 16, une chambre de combustion 19, la turbine haute pression 21 et la turbine basse pression 23. Cette dernière est liée à un arbre axial 25, creux, d'axe X, qui entraîne le rotor de la soufflante 13.

Tous ces éléments sont bien connus et ne seront pas décrits plus en détails.

L'objet premier de l'invention est de mesurer en permanence l'angle de torsion de l'arbre 25. Cet arbre a une structure globalement tubulaire ce qui, dans le mode de réalisation décrit, facilite l'implantation des composants du dispositif de mesure conforme à l'invention.

Ce dispositif comprend un générateur de faisceau laser 27, un premier filtre polarisant 29, un second filtre polarisant 31 et un récepteur de rayonnement laser 33 du type cellule photoélectrique. Les deux filtres sont tous deux solidaires de l'arbre 25. Ils sont agencés pour être traversés par le faisceau laser. Le premier filtre 29, traversé en premier, est situé près de l'extrémité amont de l'arbre (du côté de la soufflante) tandis que le second filtre 31, traversé en second est situé près de l'extrémité aval de l'arbre (du côté de la turbine basse pression).

D'une façon générale, selon l'invention, le générateur 27 est installé pour que le faisceau laser traverse les deux filtres tandis que le récepteur 33 est installé pour recevoir le faisceau ayant traversé les deux filtres.

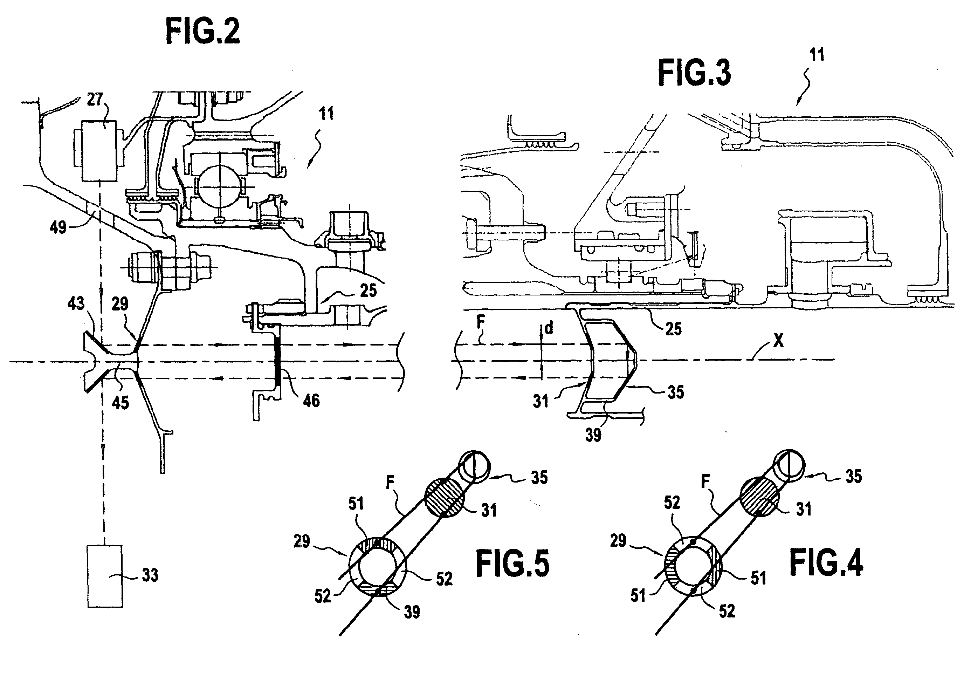

De plus (du côté aval selon l'exemple) un système de réflexion 35 est installé au voisinage d'un filtre (ici ledit second filtre 31) pour réfléchir le faisceau ayant traversé ce filtre et le renvoyer parallèlement à lui-même vers ledit récepteur 33. Cette partie du dispositif est visible sur la figure 3. Plus précisément, ledit second filtre polarisant 31 et le système de réflexion 35 sont agencés sur un même support 39 installé à l'intérieur de l'arbre 25, au voisinage de l'extrémité aval, c'est-à-dire du côté de la turbine 23. Ce support 39 porte, agencés axialement d'amont en aval, ledit second filtre polarisant 31 et un miroir tronconique dont l'angle est de 45° par rapport à l'axe de rotation X. Par conséquent, le faisceau laser F traversant une première fois le filtre polarisant 31, à une distance d de l'axe de rotation X, est réfléchi deux fois et est renvoyé parallèlement à lui-même selon une direction symétrique par rapport à l'axe de rotation X.

Le générateur 27 de faisceau laser et le récepteur 33 sont agencés, du côté de l'extrémité amont de l'arbre 25, en vis-à-vis, perpendiculairement à l'axe de rotation X de cet arbre et de part et d'autre de celui-ci. Leurs axes optiques sont donc alignés mais un autre miroir tronconique 43 à 45°, porté axialement par l'arbre 25 est placé entre l'émetteur et le récepteur. Au voisinage de cet extrémité amont de l'arbre, et solidaire en rotation avec lui, se trouve installé un support 45 portant, d'amont en aval, ce miroir tronconique 43 et ledit premier filtre polarisant 29.

Cet agencement permet de diriger le faisceau laser F émis par le générateur parallèlement à l'axe X vers le premier filtre polarisant 29 et de réfléchir le faisceau en retour vers ledit récepteur 33 après que celui-ci ait traversé une seconde fois le premier filtre polarisant 29.

Un écran transparent 46 est placé transversalement, à l'amont de l'arbre pour éviter qu'un brouillard d'huile s'échappe et vienne polluer en partie l'équipement.

Entre le générateur 27 et le miroir 43 et entre le miroir 43 et le récepteur 33, le faisceau laser traverse des trous 49 usinés dans le disque de soufflante.

Selon une autre caractéristique avantageuse de l'invention, l'un des filtres, en l'occurrence ici le premier filtre 29, comprend une couronne ou alternent des zones polarisantes 51 et des zones non polarisantes 52, ce qui permet d'obtenir une succession d'informations périodiques représentatives d'une valeur de mesure et d'une valeur de référence, respectivement.

Le fonctionnement est expliqué en référence aux figures 4 et 5.

Le générateur émet un faisceau perpendiculaire à l'axe de rotation qui est dirigé vers le miroir tronconique 43. Il est donc renvoyé parallèlement à l'axe X. Ce faisceau traverse une première fois ledit premier filtre 29, situé en amont puis ledit second filtre 31 situé à l'aval. Il est réfléchi deux fois par le miroir tronconique 35 et renvoyé parallèlement à lui-même. Il traverse à nouveau ledit second filtre 31 et enfin le premier filtre 29 avant d'être réfléchi une dernière fois vers le récepteur 33. Ledit premier filtre comporte quatre secteurs 51, 52 occupant chacun 90° avec les polarisations suivantes :
- polarisation verticale
- polarisation nulle
- polarisation horizontale
- polarisation nulle
Soit I₀ l'intensité du faisceau laser émis par le générateur 27. Lorsque la position angulaire de l'arbre 25 par rapport au faisceau est telle que représentée figure 4, (pas d'atténuation due au premier filtre) la valeur d'intensité mesurée par le récepteur 33 constitue une valeur de référence au plus égale à I₀/2.

Lorsque la position angulaire de l'arbre 25 par rapport au faisceau F est telle que représentée sur la figure 5, la valeur d'intensité mesurée est fonction de la valeur de référence et de l'angle de torsion θ.

Le récepteur 33 émet donc un signal variable. Le rapport min/max de ce signal est représentatif de sin²(2θ). On obtient donc une mesure directe de la torsion θ. De plus, la fréquence de ce signal est représentative de la vitesse de l'arbre. La connaissance de la vitesse et de la torsion (donc du couple) permet de connaître à chaque instant la puissance mécanique transmise par l'arbre.

## Revendications

1. Dispositif de mesure de torsion d'un arbre (25) tournant notamment un arbre d'entrainement, comportant un générateur de faisceau laser (27), un premier filtre polarisant (29) et un deuxième filtre polarisant (31), solidaires de l'arbre et distants l'un de l'autre et un récepteur de rayonnement laser (33), ledit générateur étant installé pour que le faisceau laser qu'il émet traverse les deux filtres et ledit récepteur étant installé pour recevoir ledit faisceau ayant traversé ces deux filtres, **caractérisé en ce qu'**un système de réflexion (35) est installé au voisinage du deuxième filtre (31) pour réfléchir le faisceau ayant traversé ce filtre et le renvoyer parallèlement à lui-même vers ledit récepteur, **en ce que** ledit système de réflexion comporte un miroir tronconique à 45° (35), et **en ce que** l'un des filtres (29) comprend une couronne où alternent des zones polarisantes (51) et des zones non polarisantes (52) pour obtenir une succession d'informations périodiques représentatives d'une valeur de mesure et d'une valeur de référence, respectivement.

2. Dispositif selon la revendication 1, **caractérisé en ce que** les deux filtres (29, 31) sont respectivement montés sur ledit arbre (25), au voisinage de ses deux extrémités.

3. Dispositif selon l'une des revendications précédentes, **caractérisé en ce que** ledit générateur (27) et ledit récepteur (33) sont agencés en vis-à-vis perpendiculairement à l'axe de rotation (X) dudit arbre (25) et de part et d'autre de celui-ci, de façon que leurs axes optiques soient alignés et **en ce qu'**un autre miroir tronconique à 45° (43) porté par ledit arbre est placé entre ledit émetteur (27) et ledit récepteur (33).

4. Dispositif selon l'une des revendications précédentes, **caractérisé en ce que** ledit arbre (25) est creux et **en ce qu'**il abrite lesdits filtres (29, 31).

5. Dispositif selon la revendication 1 et 4, **caractérisé en ce que** ledit arbre abrite ledit système de réflexion (35).

6. Dispositif selon les revendications 3 et 4, **caractérisé en ce que** ledit arbre abrite ledit autre miroir tronconique (43).

7. Dispositif selon l'une des revendications précédentes, **caractérisé en ce qu'**il est associé à un arbre de soufflante (25) dans un turboréacteur d'avion.

## Patentansprüche

1. Vorrichtung zur Messung der Torsion einer umlaufenden Welle (25), insbesondere einer Antriebswelle, umfassend einen Laserstrahlgenerator (27), ein erstes Polarisationsfilter (29) und ein zweites Polarisationsfilter (31), die mit der Welle fest verbunden und voneinander beabstandet sind, sowie einen Laserstrahlungsempfänger (33), wobei der Generator angebracht ist, damit der Laserstrahl, den er aussendet, die beiden Filter durchquert, und wobei der Empfänger angebracht ist, um den Strahl, der diese beiden Filter durchquert hat, aufzunehmen, **dadurch gekennzeichnet, dass** ein Reflexionssystem (35) in der Nähe des zweiten Filters (31) angebracht ist, um den Strahl, welcher dieses Filter durchquert hat, zu reflektieren und ihn parallel zu sich selbst zu dem Empfänger zurückzusenden, dass das Reflexionssystem einen kegelstumpfförmigen 45°-Spiegel (35) umfasst und dass eines der Filter (29) einen Kranz umfasst, an dem sich polarisierende Bereiche (51) und nicht polarisierende Bereiche (52) abwechseln, um eine Folge von periodischen Informationen, die für einen Messwert bzw. einen Referenzwert repräsentativ sind, zu erhalten.

2. Vorrichtung nach Anspruch 1, **dadurch gekennzeichnet, dass** die beiden Filter (29, 31) jeweils an der Welle (25) in der Nähe ihrer beiden Enden angebracht sind.

3. Vorrichtung nach einem der vorhergehenden Ansprüche, **dadurch gekennzeichnet, dass** der Generator (27) und der Empfänger (33) einander gegenüberliegend senkrecht zu der Rotationsachse (X) der Welle (25) sowie auf beiden Seiten derer angeordnet sind, so dass ihre optischen Achsen fluchten, und dass ein von der Welle getragener weiterer kegelstumpfförmiger 45°-Spiegel (43) zwischen dem Sender (27) und dem Empfänger (33) angeordnet ist.

4. Vorrichtung nach einem der vorhergehenden Ansprüche, **dadurch gekennzeichnet, dass** die Welle (25) hohl ist und dass sie die Filter (29, 31) beherbergt.

5. Vorrichtung nach Anspruch 1 und 4, **dadurch gekennzeichnet, dass** die Welle das Reflexionssystem (35) beherbergt.

6. Vorrichtung nach den Ansprüchen 3 und 4, **dadurch gekennzeichnet, dass** die Welle den weiteren kegelstumpfförmigen Spiegel (43) beherbergt.

7. Vorrichtung nach einem der vorhergehenden Ansprüche, **dadurch gekennzeichnet, dass** sie einer Gebläsewelle (25) in einem Turbostrahltriebwerk eines Flugzeugs zugeordnet ist.

## Claims

1. A device for measuring the twist of a rotating shaft (25), in particular a drive shaft, the device comprising a laser beam generator (27), a first polarizing filter (29) and a second polarizing filter (31), secured to the shaft and spaced apart from each other, and a laser radiation receiver (33), said generator being installed so that the laser beam it emits passes through both filters, and said receiver being installed to receive said beam after it has passed through both of the filters, the device being **characterized in that** a reflection system (35) is installed in the vicinity of the second filter (31) to reflect the beam that has passed through the filter and return it parallel to itself towards said receiver **in that** said reflection system comprises a 45° frustoconical mirror (35),and **in that** one of the filters (29) comprises a ring in which polarizing zones (51) and non-polarizing zones (52) alternate so as to obtain a periodic succession of polarizations representative of a measurement value and of a reference value, respectively.

2. A device according to claim 1, **characterized in that** the two filters (29, 31) are mounted on said shaft (25) in the vicinity of respective ones of its two ends.

3. A device according any one of the preceding claims, **characterized in that** said generator (27) and said receiver (33) are arranged facing each other perpendicularly to the axis of rotation (X) of said shaft (25) and on either side thereof, in such a manner that their optical axes are in alignment, and **in that** another 45° frustoconical mirror (43) carried by said shaft is placed between said emitter (27) and said receiver (33).

4. A device according to any one of the preceding claims, **characterized in that** said shaft (25) is hollow and **in that** it houses said filters (29, 31).

5. A device according to claim 1 and 4, **characterized in that** said shaft houses said reflection system (35).

6. A device according to claims 3 and 4, **characterized in that** said shaft is hollow and houses said filters and said other frustoconical mirror (43).

7. A device according to any one of the preceding claims, **characterized in that** it is associated with a fan shaft (25) in an airplane turbojet.
